(19) **Europäisches Patentamt**
**European Patent Office**
**Office européen des brevets**

(11) **EP 4 752 817 A1**

(12) # EUROPEAN PATENT APPLICATION

(43) Date of publication:
**03.06.2026 Bulletin 2026/23**

(51) International Patent Classification (IPC):
**G06Q 50/04** (2012.01)    **G06Q 10/0633** (2023.01)

(21) Application number: **25219011.1**

(22) Date of filing: **27.11.2025**

(52) Cooperative Patent Classification (CPC):
**G06Q 50/04; G06Q 10/0633**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.11.2024 JP 2024206865**

(71) Applicant: **JUKI Corporation**
**Tama-shi, Tokyo 206-8551 (JP)**

(72) Inventor: **FUJIMOTO, Mio**
**Tokyo, 206-8551 (JP)**

(74) Representative: **Hoeger, Stellrecht & Partner**
**Patentanwälte mbB**
**Uhlandstrasse 14c**
**70182 Stuttgart (DE)**

(54) **SEWING MANAGEMENT SYSTEM**

(57)    A sewing management system (1) including a sewing machine (2) and a management device (3) is provided. The management device (3) includes a computation unit (13) for obtaining an overall efficiency of an operator who uses the sewing machine (2), and an information acquisition unit (11) for acquiring operation information (151) from the sewing machine (2) to obtain the overall efficiency. The operation information (151) includes information for acquiring a start time and an end time of a sewing operation performed by the operator using the sewing machine (2), a total work time for each of a plurality of types of work processes included in the sewing operation, and an achieved number of pieces for each work process. The computation unit (13) obtains the overall efficiency of the operator on the basis of a target processing time (154) defined for each work process and the operation information (151) acquired by the information acquisition unit (11). In addition, the computation unit (13) obtains a process efficiency for each work process, thereby enabling evaluation of efficiency for each process.

*FIG.1*

**Description**

TECHNICAL FIELD

The present invention relates to a sewing management system.

BACKGROUND ART

As management of operation information of a sewing machine operator of the related art, a production achievement rate of the operator has been obtained based on a time of start of work and a current actual number of pieces sewn, with respect to a set value of a target number of production pieces to be sewn in one day(see, for example, JP2020-130767A).

SUMMARY OF INVENTION

In the management of operation information of the related art, the production achievement rate obtained indicates the progress during the work time and does not indicate an achievement rate as the work performance of the operator.
Therefore, it is not possible to evaluate how efficiently the operator is performing work.
An object of the present invention is to enable evaluation of the work efficiency of an operator.
The present invention provides
a sewing management system configured to manage production of an object to be sewn using a sewing machine, the sewing management system including:

the sewing machine; and
a management device configured to manage the sewing machine, wherein
the management device includes
a computation unit configured to obtain an overall efficiency of an operator who uses the sewing machine, and
an information acquisition unit configured to acquire operation information from the sewing machine in order to obtain the overall efficiency,
the operation information includes information for acquiring a start time and an end time of a sewing operation performed by the operator using the sewing machine, a total work time for each of a plurality of types of work processes included in the sewing operation, and an achieved number of pieces for each of the work processes, and
the computation unit obtains the overall efficiency of the operator on the basis of a target processing time defined for each of the work processes and the operation information acquired by the information acquisition unit.

The present invention enables the work efficiency of an operator to be evaluated in a comprehensive manner.

BRIEF DESCRIPTION OF DRAWINGS

Fig. 1 is a diagram illustrating a schematic configuration of a sewing management system according to the present embodiment.
Fig. 2 is a block diagram of a management device included in the sewing management system.
Fig. 3 is a block diagram of a sewing machine included in the sewing management system.
Fig. 4 is a table showing parameters that are used by a computation unit of the management device to obtain an overall efficiency of an operator on the basis of operation information acquired from the sewing machine, with respect to a sewing operation performed by a single operator who performed a plurality of work processes with one sewing machine.
Fig. 5 is a flowchart showing operation information generation processing that is performed by a control unit of the sewing machine.
Fig. 6 is a flowchart showing calculation processing in which a processor of the management device obtains an overall efficiency of an operator on the basis of operation information.

DESCRIPTION OF EMBODIMENTS

[Overview of Sewing Management System]

Hereinafter, embodiments of the present invention will be described with reference to the drawings.

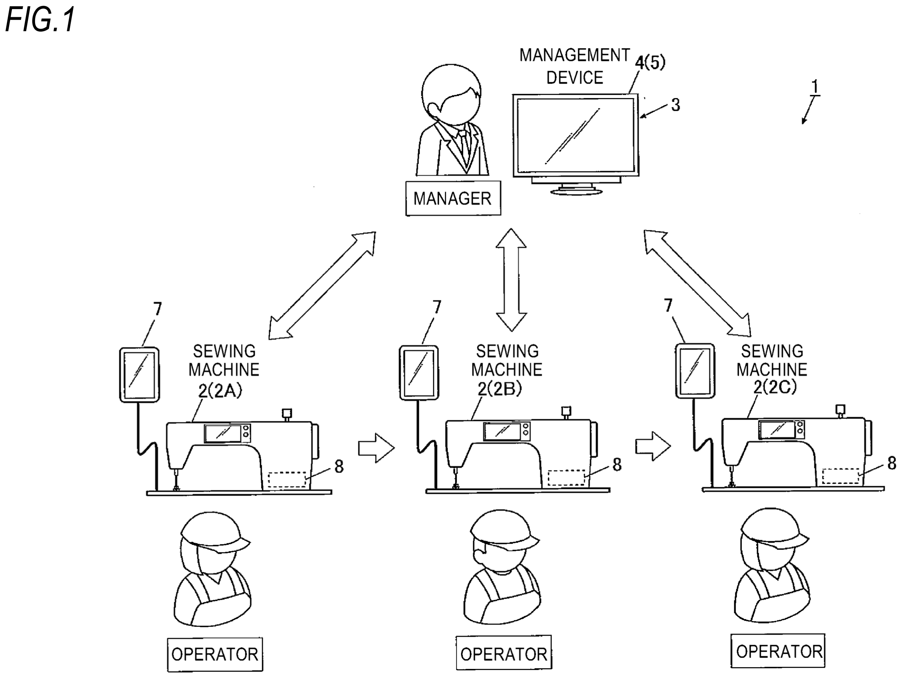

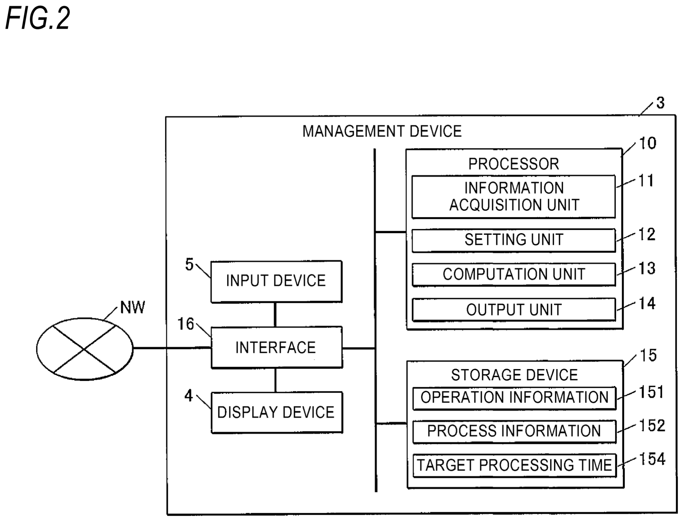

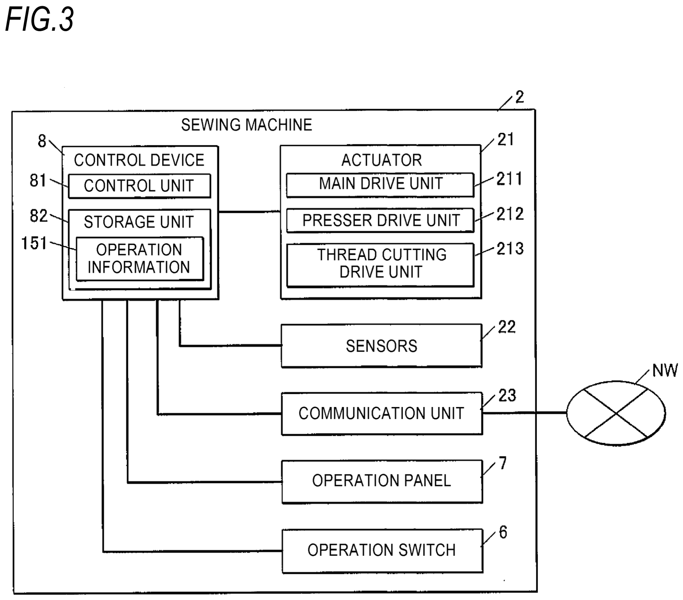

Fig. 1 is a diagram illustrating a schematic configuration of a sewing management system 1 according to the present embodiment, Fig. 2 is a block diagram of a management device 3 included in the sewing management system 1, and Fig. 3 is a block diagram of a sewing machine 2 included in the sewing management system 1.

The sewing management system 1 is a system that manages an operation status of an operator who uses a sewing machine 2. The sewing management system 1 includes sewing machines 2 and a management device 3.

For example, a plurality of sewing machines 2 are installed in a sewing factory. Each sewing machine 2 exemplifies an industrial sewing machine. Sewing is performed on an object to be sewn using each sewing machine 2, and a sewn product is produced. Examples of the object to be sewn include a sheet body such as fabric. Examples of the sewn product include clothing. Note that the number of sewing machines 2 constituting the sewing management system 1 may be one.

The management device 3 is installed in the same facility as one where the sewing machines 2 are installed. However, the management device 3 may also be installed in a remote location as long as the management device 3 can communicate predetermined information with each sewing machine 2.

In a sewing factory, sewn products are produced by the plurality of sewing machines 2. In a sewing factory, the sewing machines 2 of the same type or of multiple types according to use are installed. In a sewing factory, a plurality of work processes for producing a sewn product are assigned to each of the sewing machines 2. However, a work process of the same type may be assigned to the plurality of sewing machines 2.

Examples of the types of the sewing machines 2 include a lockstitch sewing machine for sewing a body part, a button attaching sewing machine for attaching a button to a body part, and a buttonhole sewing machine for performing buttonhole stitching. Note that the type of the sewing machine 2 is an example and may be appropriately changed according to a type of the object to be sewn and a type of its work process.

In general, multiple types and a plurality of sewing machines 2 are installed in one sewing factory. The number of the sewing machines 2 included in the sewing management system 1 may be one or more, and there is no limitation on the quantity. However, for simplification of description, only three sewing machines 2 are illustrated in Fig. 1.

As illustrated in Fig. 1, in a sewing factory, the management device 3 is used by a manager, and each sewing machine 2 is used by an operator. The manager manages the operator. The operator operates the sewing machine 2 to execute work processes of a sewing operation.

The operator may be multiple persons or a single person, and the number of operators need not match the number of the sewing machines 2. For example, one operator may operate the plurality of sewing machines 2, or multiple operators may alternately use one sewing machine 2.

[Management Device]

The management device 3 includes a display device 4 and an input device 5. The display device 4 displays display data. The display device 4 includes a flat panel display such as a liquid crystal monitor or an organic EL display. The input device 5 generates input data when operated by the manager.

The input device 5 includes a touch panel (touch sensor) arranged on a display screen of the display device 4. Note that the input device 5 may be a computer keyboard, a mouse, or a voice input device.

The management device 3 is communicably connected to the plurality of sewing machines 2 in a sewing factory. However, the management device 3 need not be capable of communicating with the sewing machines 2 in real time. The management device 3 only needs to be capable of acquiring predetermined information that has been data-converted from the sewing machine 2. Accordingly, necessary predetermined information may be transferred from the sewing machine 2 to a recording medium, and the management device 3 may acquire, from the recording medium, the predetermined information from the sewing machine 2.

The management device 3 is capable of communicating with one or a plurality of sewing machines 2. The management device 3 communicates with a control device 8 of the sewing machine 2. The management device 3 and the control device 8 communicate in a wired or wireless manner via a network NW (see Fig. 2). The management device 3 and the control device 8 communicate via a network NW such as a local area network (LAN). The management device 3 and the control device 8 may communicate via a wireless LAN such as Wi-Fi (registered trademark).

The management device 3 collects operation information 151 of each of the plurality of sewing machines 2 (see Figs. 2 and 3). The management device 3 calculates an overall efficiency of an operator (described below) from the operation information 151 of each of the plurality of sewing machines 2 and causes the display device 4 to display it.

As illustrated in Fig. 2, the management device 3 includes a computer system. The management device 3 includes at least one processor 10, a storage device 15 in which a computer program executable by the processor 10 is stored, and an interface 16 for the processor 10 to communicate with various devices.

The processor 10 is a computation element such as a central processing unit (CPU).

The storage device 15 includes a main memory, including a non-volatile memory such as a read only memory (ROM) and a volatile memory such as a random access memory (RAM), and a storage such as a hard disk drive or a solid state drive.

The interface 16 includes an input/output circuit for performing signal input/output with the display device 4 and the input device 5, and a communication controller for performing communication with the control device 8 of each sewing machine 2 via the network NW.

The management device 3 includes an information acquisition unit 11, a setting unit 12, a computation unit 13, and an output unit 14. The information acquisition unit 11, the setting unit 12, the computation unit 13, and the output unit 14 are function blocks that are implemented when the processor 10 executes a program stored in the storage device 15. That is, the processor 10 functions as the information acquisition unit 11, the setting unit 12, the computation unit 13, and the output unit 14 by executing the program.

The information acquisition unit 11 acquires the operation information 151 from each sewing machine 2 via the network NW. The operation information 151 of the sewing machine 2 includes, for example, input data that is input from an operation switch 6 of the sewing machine 2 described below, operation data of a thread cutting mechanism, and the like.

The setting unit 12 receives a setting of a target processing time 154 for each work process from the manager via the input device 5.

The target processing time 154 is also called SAM (Standard Allotted Minutes), and is set as "a time obtained by adding an allowance time to a time required for work when an operator having a standard level of proficiency has executed a work process under standard work procedures, methods, and work conditions."

The target processing time 154 is a target value (ideal value) that is calculated under conditions set in production management.

The target processing times 154 set for the respective work processes are all stored in the storage device 15.

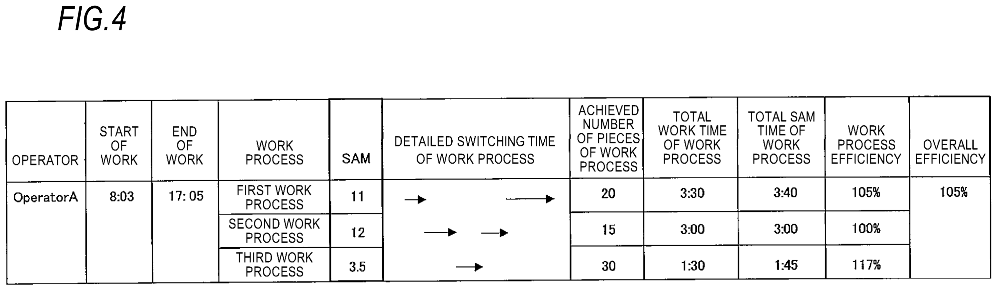

In addition, the setting unit 12 receives a setting of process information 152, which indicates a work process to be executed by each sewing machine 2, from the manager via the input device 5. An example of Fig. 4 described below shows a case in which a first work process, a second work process, and a third work process are set to be assigned to a certain single sewing machine 2 by the input device 5.

In addition, the process information 152 may include setting information specific to each work process. For example, the number of thread cutting executions performed during sewing of each work process corresponds to such setting information. The manager may enter contents of the process information 152 by the input device 5.

The output unit 14 outputs information generated by the computation unit 13 and information set in the setting unit 12. The output unit 14 outputs a display screen for various types of information to the display device 4 via the interface 16. Specifically, the output unit 14 causes the display device 4 to display the target processing time 154, the overall efficiency of each operator (described below) calculated by the computation unit 13, and the like.

The storage device 15 stores a program that is executed by the processor 10, and also stores information acquired by the information acquisition unit 11 and setting information for the setting unit 12. The storage device 15 stores the operation information 151 of each sewing machine 2, the process information 152 of each sewing machine 2, and the setting information of the target processing time 154.

[Sewing Machine]

Since the mechanical configuration of the sewing machine 2 is the same as that of a known sewing machine, its detailed description is omitted. The sewing machine 2 includes a control device 8, an actuator 21, sensors 22, a communication unit 23, an operation panel 7, and an operation switch 6.

The control device 8 outputs a control signal for controlling the sewing machine 2. The control device 8 is composed of a computer system. That is, the control unit 8 includes a control unit 81 including a processor such as a CPU, and a storage unit 82 including a storage device such as a read only memory (ROM) and a random access memory (RAM). In addition, the storage unit 82 stores a program for causing the processor to function as the control unit 81. The storage unit 82 stores the operation information 151 acquired from the actuator 21, the sensors 22, the operation switch 6, and the like. In addition, the storage unit 82 stores setting data and the like input from the operation panel 7.

The control device 8 transmits the setting data of the sewing machine 2 and the operation information 151 of the sewing machine 2 to the management device 3 via the communication unit 23. The setting data of the sewing machine 2 includes information specifying processes (a first process, a second process, a third process, and the like) that are executed by the sewing machine 2, and setting values of operating conditions of the sewing machine 2.

The actuator 21 includes a main drive unit 211, a presser drive unit 212, a thread cutting drive unit 213, and the like. These drive units include actuators such as electric motors and solenoids.
The main drive unit 211 is a main drive source of the sewing machine 2 for performing reciprocating driving of a needle bar of the sewing machine 2, rotation of a shuttle, feeding operation, and the like.

The presser drive unit 212 is a drive source for performing a raising and lowering operation of a presser for an object to be sewn.

The thread cutting drive unit 213 is a drive source for operating a thread cutting mechanism of the sewing machine 2. The thread cutting mechanism cuts a thread from the object to be sewn set on the sewing machine 2 at a timing when, for example, a sewing operation by the sewing machine 2 reaches a break point.

Note that the configuration of the actuator 21 is an example, and some of the configuration may not be mounted. Additionally, the sewing machine 2 may include an actuator for a use other than the above.

The sensors 22 are sensors that detect, for example, driving amounts or specific operating states of the main drive unit 211, the presser drive unit 212, and the thread cutting drive unit 213. The sensors include an encoder that detects a rotation amount of a motor, a position sensor that detects a displacement of a movable member, and the like. Detection data of the sensors 22 is output to the control device 8.

The operation switch 6 receives an operation input accompanying a sewing operation by the sewing machine 2. The operator performs an input operation on the operation switch 6, for example, at a timing when the operator faces the sewing machine 2 and starts a sewing operation, and at a timing when the operator interrupts or ends the sewing operation and moves away from the sewing machine 2. In this case, the respective times at which the operation switch 6 is operated are recorded in the operation information 151.

The operation panel 7 includes a display device, an operation device, and a microcomputer.

The display device includes a flat panel display such as a liquid crystal monitor or an organic EL display.

The operation device includes a touch panel (touch sensor) arranged on a display screen of the display device. The microcomputer includes at least one processor and a main memory in which a computer program executable by the processor is stored.
The operation panel 7 receives an input operation when the operator inputs a setting or the like to the control device 8 of the sewing machine 2, and displays information related to control of the sewing machine 2. The operation panel 7 is composed of, for example, a liquid crystal monitor having a touch panel.

For example, the operation panel 7 receives selection of a work process to be executed next by the sewing machine 2, add selection of setting data for a sewing operation to be performed in the selected work process. The operator selects, by using the operation panel 7, a work process to be executed next by the sewing machine 2 from among the process information 152 set in the management device 3.

When the operator repeatedly executes the same work process, the operator does not need to select the work process from the operation panel 7 each time the operator executes one work process. When the work process to be executed next is changed, the operator only needs to select a new work process from the operation panel 7.

In this case, the work process selected by the operator and a time at which the operator makes the selection from the operation panel 7 are recorded in the operation information 151.

The communication unit 23 includes a network controller for connecting the control device 8 to the network NW. The control device 8 communicates with the management device 3 via the communication unit 23 and the network NW.

The control device 8 transmits, as the operation information 151, input data of the operation switch 6, operation data of the thread cutting drive unit 213, and the like to the management device 3. The input data of the operation switch 6 is, for example, log data that records a time at which the operation switch 6 is operated. The operation data of the thread cutting drive unit 213 is log data that records a time at which the thread cutting drive unit 213 is operated.

[Calculation of Work Efficiency of Operator]

Fig. 4 is a table showing parameters that are used by the computation unit 13 of the management device 3 to obtain an overall efficiency of an operator on the basis of the operation information 151 acquired from the sewing machine 2, with respect to a sewing operation performed by a single operator who performed a plurality of work processes with one sewing machine 2.

A method for calculating the overall efficiency of the operator by the computation unit 13 will be described based on Fig. 4.

The "overall efficiency" of an operator is a concept that indicates a work efficiency of a specific operator during a period from a time of "start of work" to a time of "end of work" in one unit of sewing operation using one sewing machine 2.

The term "overall" indicates that the efficiency is not limited to a work efficiency in a single work process. For example, when sewing of multiple types of work processes is performed within the period of one unit of sewing operation, the efficiency of the entire sewing operation including the multiple types of work processes becomes the overall efficiency.

The "sewing operation" has one unit defined as a period from a time of "start of work" to a time of "end of work" shown in Fig. 4.

The "start of work" used herein includes not only a start time of a first sewing operation during working hours in a day, but also a time of resumption of a first sewing operation after an "end of work" of an immediately preceding sewing operation.

In addition, the "end of work" includes not only an end of the last sewing operation during the working hours in a day, but also interruption of the sewing operation, such as a lunch break or a restroom break. It also includes interruptions that are unavoidably caused by a malfunction of the sewing machine 2. That is, a certain period of interruption that occurs between sewing operations of repeatedly performed work processes is also included in the "end of work."

The time of "start of work" and the time of "end of work" time shown in Fig. 4 can be acquired from the operation information 151.

As described above, when the operation switch 6 is operated, the control device 8 of the sewing machine 2 records the operation time as the time of "start of work" or the time of "end of work" as part of the operation information 151.

Accordingly, the computation unit 13 can acquire a start time and an end time of one unit of sewing operation from the operation information 151.

Note that the operation switch 6 may be prepared separately as a switch indicating "start of work" and a switch indicating "end of work."

In addition, when a switch indicating "start of work" and a switch indicating "end of work" are used in common as a single operation switch 6, the recognition between "start of work" and "end of work" may be alternately switched each time the operation switch 6 is operated. For example, each odd-numbered operation time of the operation switch 6 from the start of the operator's working hours in a day may be recognized as the time of "start of work", and each even-numbered operation time of the operation switch 6 from the start of the operator's working hours in a day may may be recognized as the time of "end of work."

Note that, instead of the operation switch, the switching may be performed by reading, detecting, or the like by a reader of a recording element such as an RFID card in which some information such as process information is recorded.

During a period of one unit of sewing operation, sewing is performed with one or a plurality of achieved number of pieces for one or more types of work processes.

A type of work process performed during a period of one unit of sewing operation can be acquired from the operation information 151.

As described above, the control device 8 of the sewing machine 2 records, when the operator selects a work process to be performed next from the operation panel 7, the selected work process and a time of the selection as part of the operation information 151.

Accordingly, the computation unit 13 can recognize that the work process selected at the time within the period of one unit of sewing operation is a work process performed during the period of one unit of sewing operation.

When multiple types of work processes are selected during the period of one unit of sewing operation, the computation unit 13 can recognize that sewing of multiple types of work processes has been performed in the sewing operation. The example of Fig. 4 shows that the "first work process," "second work process," and "third work process" are performed during the period of one unit of sewing operation.

A "detailed switching time of work process" shown in Fig. 4 can be acquired from the operation information 151.

As described above, since the work process selected from the operation panel 7 and the time of selection are recorded in the operation information 151, the computation unit 13 can recognize a period from a time of selection of each work process to a time of selection of a next work process as a "continuous work period" of one work process.

The "detailed switching time of work process" indicates a time at which each "continuous work period" reaches a break point.

Note that in Fig. 4, the "continuous work period" of each work process within the period of one unit of sewing operation is illustrated by an arrow representing a period from its start to its end.

In addition, Fig. 4 illustrates that, within the period of one unit of sewing operation, a work process of the same type may be divided into a plurality of "continuous work periods."

A "achieved number of pieces of work process" shown in Fig. 4 can be acquired from the operation information 151 and the process information 152.

As described above, the control device 8 of the sewing machine 2 detects an operation of the thread cutting drive unit 213 and records the operation time at that moment as part of the operation information 151.

Accordingly, the computation unit 13 can acquire, based on the "continuous work period" obtained from the "detailed switching time of work process" described above, the number of thread-cutting executions performed in each "continuous work period" from the operation time of the thread cutting drive unit 213 belonging to each "continuous work period".

In addition, when one "work process" is divided into a plurality of "continuous work periods," the number of thread-cutting executions in each "continuous work period" is summed.

Accordingly, the computation unit 13 obtains the number of thread-cutting executions for each "work process".

In addition, the number of thread-cutting executions performed during the sewing of one work process is recorded for each type of work process in the process information 152.

Accordingly, the computation unit 13 can calculate the achieved number of pieces of work process by referring to the process information 152 and dividing the [number of thread-cutting executions of work process] by the [number of thread-cutting executions performed during the sewing of one work process].

A "total work time of work process" shown in Fig. 4 can be acquired from the operation information 151.

As described above, since the "detailed switching time of work process" is obtained from the operation information 151, a time length of each "continuous work period" can be obtained.

Note that, as described above, when a work process consists of one "continuous work period," the time length of the "continuous work period" becomes the "total work time of work process," and when a work process consists of a plurality of "continuous work periods," a sum of time lengths of the plurality of "continuous work periods" becomes the "total work time of work process."

A value of "SAM" of each work process shown in Fig. 4 can be acquired from the target processing time 154.

A "total SAM time of work process" shown in Fig. 4 can be obtained by multiplying the value of "SAM" of work process by the "achieved number of pieces of work process." The computation unit 13 calculates the "total SAM time of work process" by multiplying the value of "SAM" by the "achieved number of pieces of work process" for each work process.

A "work process efficiency" shown in Fig. 4 is a work efficiency for each of various types of work processes included in the sewing operation performed by the operator.

The "work process efficiency" can be obtained by dividing the value of the "total SAM time of work process" of the work process by the "total work time of work process." The computation unit 13 calculates the "work process efficiency" by dividing the value of "total SAM time of work process" by the "total work time of work process" for each work process.

The "work process efficiency" is expressed as a formula as follows.

$$[\text{work process efficiency}]$$

$$= [\text{SAM}] \times [\text{achieved number of pieces of work process}] \div [\text{total work time of work process}]$$

$$= [\text{total SAM time of work process}] \div [\text{total work time of work process}]$$

The "overall efficiency" in one unit of sewing operation can be acquired from the value of "SAM" in each work process included in the sewing operation, the "achieved number of pieces of work process" in each work process, and the "total work time of work process" in each work process.

The computation unit 13 calculates the "total SAM time of work process" for each work process by multiplying the value of "SAM" by the "achieved number of pieces of work process" for each work process included in the sewing operation.

Additionally, the computation unit 13 sums the values of "total SAM time of work process" of the respective work processes. Then, the computation unit 13 calculates the "overall efficiency" by dividing the total value by the total value obtained by summing the "total work time of work process" of each work process included in the sewing operation.

The "overall efficiency" is expressed as a formula as follows.

$$[\text{overall efficiency}]$$

$$= \{\text{total value of } ([\text{SAM}] \times [\text{achieved number of pieces of work process}]) \text{ of all work processes}\} \div (\text{total value of } [\text{total work time of work process}] \text{ of all work processes})$$

$$= (\text{total value of } [\text{total SAM time of work process}] \text{ of all work processes}) \div (\text{total value of } [\text{total work time of work process}] \text{ of all work processes})$$

[Operation Information Generation processing]

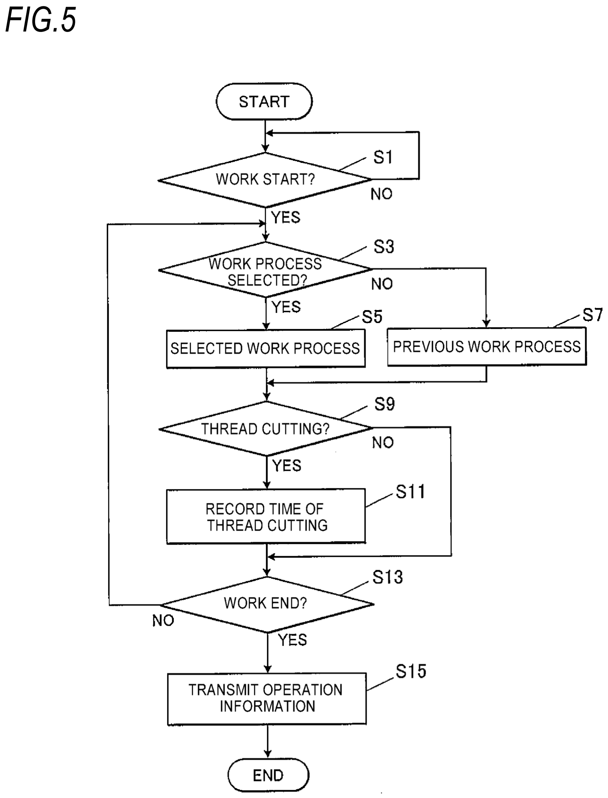

Fig. 5 is a flowchart showing generation processing of the operation information 151 that is performed by the control unit 81 of the sewing machine 2. The generation processing of the operation information 151 will be sequentially described.

First, the control unit 81 of the sewing machine 2 monitors whether the operation switch 6 is operated. When an input operation on the operation switch 6 by the operator is detected, the control unit records the current time in the operation information 151 and determines whether the input operation on the operation switch 6 is "start of sewing" (step S1).

If the input operation on the operation switch 6 is not "start of sewing," the control unit continues the monitoring of step S1.

In addition, if the input operation on the operation switch 6 is "start of sewing," the control unit 81 monitors start of driving of the main drive unit 211, and determines whether a "work process" has been selected from the operation panel 7 by the operator before the start of driving (step S3).

When a "work process" has been selected, the control unit 81 starts the selected "work process" (step S5) and records the time at which the "work process" was selected in the operation information 151.

However, in the case of a selection of the "work process" accompanying the first start of driving of the main drive unit 211 after "start of sewing," the control unit need not record the current time in the operation information 151.

The recording of the current time accompanying the selection of the "work process" in step S5 is a process for recording the start time of the newly selected "work process." However, in the case of a selection of the "work process" accompanying the first start of driving of the main drive unit 211 after "start of sewing," the time of "start of sewing" may be regarded as the start time of the "work process," and therefore, recording to the operation information 151 need not be performed.

In addition, if no "work process" has been selected, the control unit recognizes that a "work process" immediately preceding the last selected work process is continuing (step S7).

Next, the control unit 81 determines whether thread cutting has been performed by driving of the thread cutting drive unit 213 (step S9).

If no thread cutting has been performed, the control unit 81 proceeds to step S13.

On the other hand, if thread cutting has been performed, the control unit 81 records the current time as the execution time of the thread cutting in the operation information 151 (step S11).

Next, the control unit 81 monitors whether the operation switch 6 is operated (step S13), and if an input operation on the operation switch 6 by the operator is detected, the control unit records the current time in the operation information 151 as the time of "end of sewing."

Then, the control unit 81 transmits the operation information 151 to the management device 3 (step S15), and ends the generation process of the operation information 151.

On the other hand, if an input operation on the operation switch 6 by the operator is not detected, the control unit 81 repeats the processes of steps S3 to S13.

[Overall Efficiency Calculation Processing]

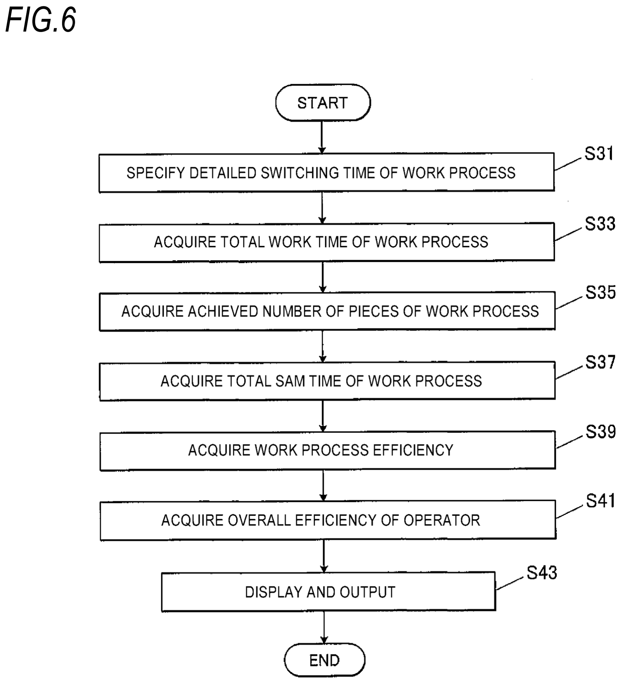

Fig. 6 is a flowchart showing calculation processing in which the processor 10 of the management device 3 obtains an overall efficiency of an operator on the basis of the operation information 151 acquired from the control unit 81 of the sewing machine 2. The overall efficiency calculation processing of the operator will be sequentially described.

The computation unit 13 of the processor 10 acquires, from the operation information 151, the "detailed switching time of work process" for the plurality of work processes executed by the sewing machine 2 (step S31).

Since the time of "start of work," the time of "end of work," and the selection time of "work process" are recorded in the operation information 151, the computation unit 13 can specify, from these times, a start time and an end time of "continuous work period" in which each work process was performed.

The start time of first "continuous work period" in one unit of sewing operation may be made to coincide with the time of "start of work". The end time of last "continuous work period" in one unit of sewing operation may be made to coincide with the time of "end of work".

The computation unit 13 acquires, from the "detailed switching time of work process" acquired in step S31, the "total work time of work process" for each work process (step S33).

Since the start time and the end time of "continuous work period" of each work process are known, the computation unit 13 can calculate the time length of "continuous work period" from a time difference between the start time and the end time.

When a work process consists of a single "continuous work period," the "total work time of work process" of the work process coincides with the time length of the "continuous work period."

When a work process is divided into a plurality of "continuous work periods," the "total work time of work process" of the work process coincides with the total value of the time lengths of the plurality of "continuous work periods."

The computation unit 13 acquires, from the operation information 151 and the process information 152, the "achieved number of pieces of work process" for each work process (step S35).

Since the start time and the end time of each "continuous work period" are known, and the execution time of the thread cutting is recorded in the operation information 151, the computation unit 13 can obtain the number of thread-cutting executions during each "continuous work period."

Furthermore, since the number of thread-cutting executions performed in each work process is recorded in the process information 152, the computation unit 13 can obtain the "achieved number of pieces of work process" in each work process from the total value of the number of thread-cutting executions performed during the "continuous work period" belonging to each work process.

The computation unit 13 acquires, from the operation information 151, the process information 152, and the target processing time 154, the "total SAM time of work process" for each work process (step S37).

The computation unit 13 can acquire the "SAM" of each work process from the target processing time 154.

In addition, since the computation unit 13 acquires the "achieved number of pieces of work process" in each work process from the operation information 151 and the process information 152, the computation unit 13 can calculate the "total SAM time of work process" for each work process by calculation of [SAM] × [achieved number of pieces of work process] for each work process.

The computation unit 13 acquires, from the operation information 151, the process information 152, and the target processing time 154, the "work process efficiency" for each work process (step S39).

The computation unit 13 has already acquired, from the operation information 151, the "total work time of operation process" for each work process.

In addition, the computation unit 13 has already acquired, from the operation information 151, the process information 152, and the target processing time 154, the "total SAM time of work process" for each work process.

Accordingly, the computation unit 13 can calculate the "work process efficiency" for each work process by calculation of [total SAM time of work process] ÷ [total work time of work process] for each work process.

The computation unit 13 acquires, from the operation information 151, the process information 152, and the target processing time 154, the "overall efficiency" of the operator (step S41).

The computation unit 13 has already acquired, from the operation information 151, the "total work time of operation process" for each work process.

In addition, the computation unit 13 has already acquired, from the operation information 151, the process information 152, and the target processing time 154, the "total SAM time of work process" for each work process.

Accordingly, the computation unit 13 can calculate the "overall efficiency" of the operator by calculation of (total value of [total SAM time of work process] of all work processes) ÷ (total value of [total work time of work process] of all work processes).

The output unit 14 displays and outputs the "work process efficiency" of each work process and the "overall efficiency" of the operator obtained by the computation unit 13 on the display device 4 (step S43).

Then, the overall efficiency calculation processing is ended.

Note that the process of step S43 may be performed by only storing "work process efficiency" and "overall efficiency" in the storage device 15, instead of displaying and outputting them on the display device 4. Alternatively, the "work process efficiency" and the "overall efficiency" may be transmitted and output externally from the management device 3 via a network.

In addition, the processes of steps S33 and S35 in the overall efficiency calculation processing may be performed in reversed order.

In addition, in step S41, when obtaining the "overall efficiency," the computation unit 13 obtains the "total work time of work process" for each of the plurality of work processes and calculates the total value of all the "total work times of work process."

In contrast, the computation unit 13 may regard the total value of all the "total work times of work process" as being equal to the time length from the start time to the end time of the sewing operation, and may calculate [overall efficiency] = (total value of [total SAM time of work process] of all work processes) ÷ (time length from start time to end time of sewing operation).

[Technical Effects of Embodiment of Invention]

The management device 3 of the sewing management system 1 includes the computation unit 13 that obtains the overall efficiency of an operator who uses the sewing machine 2, and the information acquisition unit 11 that acquires the operation information 151 from the sewing machine 2.

In addition, the operation information 151 includes information on the start time and the end time of the sewing operation performed by the operator using the sewing machine 2, information on the time at which each work process was selected for acquiring the total work time for each work process included in the sewing operation, and information on the time of thread-cutting execution for acquiring the achieved number of pieces for each work process.

Accordingly, the computation unit 13 can obtain the overall efficiency of the operator on the basis of the target processing time of each work process and the operation information.

Therefore, the management device 3 can acquire, for the operator, not the process efficiency corresponding to the content of each work process, but the overall work efficiency in the sewing operation including the plurality of work processes, and can provide the manager with materials for determining the operator's overall skill.

In addition, the computation unit 13 of the management device 3 calculates the overall efficiency of the operator by dividing the total value obtained by summing all the multiplication values of the target processing time for each work process and the achieved number of pieces of the work process by the total value obtained by summing all the total work times for each work process.

Therefore, the overall efficiency of the operator can be obtained as an overall efficiency value of the sewing operation while suppressing bias toward the process efficiency of any one of the work processes.

In addition, the computation unit 13 can also calculate the overall efficiency of the operator by treating the total value obtained by summing the total work time for each work process as the time from the start time to the end time of the sewing operation.

In this case, the processing for obtaining the total work time for each work process can be omitted when calculating the operator's overall efficiency, allowing the operator's overall efficiency to be calculated more quickly and with a reduced processing load.

Additionally, the management device 3 includes the setting unit 12 that sets the target processing time of each work process. Accordingly, the target processing time of each work process can be adjusted as appropriate, making it possible to obtain the operator's overall efficiency under conditions that satisfy the manager's requirements.

In addition, the computation unit 13 obtains the process efficiency for each work process by dividing the value obtained by multiplying the target processing time of the work process by the achieved number of pieces by the total work time.

Accordingly, the management device 3 can acquire, for the operator, not only the overall work efficiency but also the process efficiency corresponding to each work process, thereby providing the manager with both materials for determining the operator's overall skill and materials for determining the operator's skill in each work process.

[Others]

The embodiment of the present invention has been described. However, the present invention is not limited to the above embodiment. For example, in the above embodiments, a component integrally formed by a single member may be replaced with a component divided into a plurality of members and connected or fixed to each other. Additionally, a component formed by connecting a plurality of members may be replaced with a component formed integrally by a single member. In addition, the details described in the embodiments may be appropriately changed without departing from the spirit of the invention.

For example, a part of the processes of steps S31 to S37 of the overall efficiency calculation processing of the operator performed by the computation unit 13 of the management device 3 may be performed by the control unit 81 of the sewing machine 2, and the remaining processing may be performed by the computation unit 13.

In addition, in the sewing machine 2, the achieved number of pieces for a work process is acquired from the number of thread cutting executions. However, the sewing machine may also be configured such that, each time one work process for one object to be sewn is completed, the operator inputs completion using a button or the like, and the achieved number of pieces is obtained from the number of such inputs. Alternatively, the configuration may be such that, each time one work process for one object to be sewn is completed, a sensor detects the operator's hand movement or the passage of the object to be sewn, thereby acquiring the achieved number of pieces.

In addition, the sewing machine 2 may be configured to receive input of operator identification information such as an operator ID for identifying the operator, and to have the control unit 81 add the operator identification information to the operation information 151 and transmit it to the management device 3.

**Claims**

1.  A sewing management system configured to manage production of an object to be sewn using a sewing machine, the sewing management system comprising:

    the sewing machine; and
    a management device configured to manage the sewing machine, wherein
    the management device comprises
    a computation unit configured to obtain an overall efficiency of an operator who uses the sewing machine, and
    an information acquisition unit configured to acquire operation information from the sewing machine in order to obtain the overall efficiency,
    the operation information comprises information for acquiring a start time and an end time of a sewing operation performed by the operator using the sewing machine, a total work time for each of a plurality of types of work processes included in the sewing operation, and an achieved number of pieces for each of the work processes, and

the computation unit obtains the overall efficiency of the operator on the basis of a target processing time defined for each of the work processes and the operation information acquired by the information acquisition unit.

2. The sewing management system according to claim 1, wherein the computation unit calculates the overall efficiency of the operator by,

   for each of the work processes, obtaining a multiplication value of the target processing time and the achieved number of pieces of each work process, and then obtaining a total value by summing the respective multiplication values, and

   dividing the total value by a total value obtained by summing the total work time for each work process.

3. The sewing management system according to claim 2, wherein the computation unit calculates the overall efficiency of the operator by treating the total value obtained by summing the total work time for each work process as a time from a start time to an end time of the sewing operation.

4. The sewing management system according to claim 1, wherein the management device comprises a setting unit configured to set the target processing time of each of the work processes.

5. The sewing management system according to claim 1,
   wherein the computation unit, for each of the work processes, obtains a process efficiency by dividing a value obtained by multiplying the target processing time by the achieved number of pieces by the total work time.

FIG.1

MANAGEMENT DEVICE 4(5)

3

1

MANAGER

7  SEWING MACHINE 2(2A)  8

7  SEWING MACHINE 2(2B)  8

7  SEWING MACHINE 2(2C)  8

OPERATOR

OPERATOR

OPERATOR

EP 4 752 817 A1

*FIG.2*

## FIG.3

SEWING MACHINE — 2

CONTROL DEVICE — 8
- CONTROL UNIT — 81
- STORAGE UNIT — 82
  - OPERATION INFORMATION — 151

ACTUATOR — 21
- MAIN DRIVE UNIT — 211
- PRESSER DRIVE UNIT — 212
- THREAD CUTTING DRIVE UNIT — 213

SENSORS — 22

COMMUNICATION UNIT — 23 — NW

OPERATION PANEL — 7

OPERATION SWITCH — 6

## FIG.4

EP 4 752 817 A1

| OPERATOR | START OF WORK | END OF WORK | WORK PROCESS | SAM | DETAILED SWITCHING TIME OF WORK PROCESS | ACHIEVED NUMBER OF PIECES OF WORK PROCESS | TOTAL WORK TIME OF WORK PROCESS | TOTAL SAM TIME OF WORK PROCESS | WORK PROCESS EFFICIENCY | OVERALL EFFICIENCY |
|---|---|---|---|---|---|---|---|---|---|---|
| OperatorA | 8:03 | 17:05 | FIRST WORK PROCESS | 11 | → → | 20 | 3:30 | 3:40 | 105% | 105% |
| | | | SECOND WORK PROCESS | 12 | → → | 15 | 3:00 | 3:00 | 100% | |
| | | | THIRD WORK PROCESS | 3.5 | → | 30 | 1:30 | 1:45 | 117% | |

*FIG.5*

# FIG.6

```
                    ┌─────────┐
                    │  START  │
                    └────┬────┘
                         ↓
  ┌──────────────────────────────────────────────────┐    S31
  │  SPECIFY DETAILED SWITCHING TIME OF WORK PROCESS   │
  └──────────────────────┬───────────────────────────┘
                         ↓
  ┌──────────────────────────────────────────────────┐    S33
  │     ACQUIRE TOTAL WORK TIME OF WORK PROCESS        │
  └──────────────────────┬───────────────────────────┘
                         ↓
  ┌──────────────────────────────────────────────────┐    S35
  │  ACQUIRE ACHIEVED NUMBER OF PIECES OF WORK PROCESS │
  └──────────────────────┬───────────────────────────┘
                         ↓
  ┌──────────────────────────────────────────────────┐    S37
  │     ACQUIRE TOTAL SAM TIME OF WORK PROCESS         │
  └──────────────────────┬───────────────────────────┘
                         ↓
  ┌──────────────────────────────────────────────────┐    S39
  │         ACQUIRE WORK PROCESS EFFICIENCY            │
  └──────────────────────┬───────────────────────────┘
                         ↓
  ┌──────────────────────────────────────────────────┐    S41
  │      ACQUIRE OVERALL EFFICIENCY OF OPERATOR        │
  └──────────────────────┬───────────────────────────┘
                         ↓
        ┌──────────────────────────────────┐    S43
        │        DISPLAY AND OUTPUT         │
        └──────────────────┬───────────────┘
                         ↓
                    ┌─────────┐
                    │   END   │
                    └─────────┘
```

17

# EUROPEAN SEARCH REPORT

**Application Number**

EP 25 21 9011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 859 070 A1 (JUKI KK [JP]) 4 August 2021 (2021-08-04) | 1,4 | INV. G06Q50/04 |
| Y | * abstract * * paragraph [0006] * * paragraphs [0046] - [0050] * | 2,3,5 | ADD. G06Q10/0633 |
| | ----- | | |
| Y | JP 2018 055493 A (BROTHER IND LTD) 5 April 2018 (2018-04-05) | 2,3,5 | |
| A | * abstract * * paragraphs [0024] - [0031] * | 1,4 | |
| | ----- | | |
| A | JP 2020 130767 A (JUKI KK) 31 August 2020 (2020-08-31) * the whole document * | 1-5 | |
| | ----- | | |
| A | WO 2021/181237 A1 (RAGHUWANSHI SANDEEP [IN]) 16 September 2021 (2021-09-16) * the whole document * | 1-5 | |
| | ----- | | |

**TECHNICAL FIELDS SEARCHED (IPC)**

G06Q

The present search report has been drawn up for all claims

| Place of search | Date of completion of the search | Examiner |
|---|---|---|
| Munich | 16 February 2026 | Djokovic, Dusan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 9011

This annex lists the patent family members relating to the patent documents cited in  the above-mentioned European search report.
The members are as contained in the European Patent Office EDP file on
The European Patent Office is in no way liable for these particulars which are merely given for the purpose of information.

16-02-2026

| Patent document cited in search report | | Publication date | Patent family member(s) | | Publication date |
|---|---|---|---|---|---|
| EP  3859070 | A1 | 04-08-2021 | CN | 113253680 A | 13-08-2021 |
| | | | EP | 3859070 A1 | 04-08-2021 |
| | | | JP | 7460376 B2 | 02-04-2024 |
| | | | JP | 2021117815 A | 10-08-2021 |
| | | | US | 2021232127 A1 | 29-07-2021 |
| JP 2018055493 | A | 05-04-2018 | NONE | | |
| JP 2020130767 | A | 31-08-2020 | CN | 111607914 A | 01-09-2020 |
| | | | JP | 2020130767 A | 31-08-2020 |
| WO 2021181237 | A1 | 16-09-2021 | NONE | | |

EPO FORM P0459

For more details about this annex : see Official Journal of the European Patent Office, No. 12/82

**EP 4 752 817 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020130767 A